Europäisches Patentamt

European Patent Office

Office européen des brevets

(19)

(11) Publication number: **0 032 440**
**B1**

# (12) EUROPEAN PATENT SPECIFICATION

(45) Date of publication of patent specification: **17.04.85**

(51) Int. Cl.⁴: **H 02 K 3/47, H 02 K 15/04**

(21) Application number: **81300091.6**

(22) Date of filing: **09.01.81**

(54) **Coil and coil former for brushless and ironless armature motors.**

(30) Priority: **10.01.80 US 111125**

(43) Date of publication of application:
**22.07.81 Bulletin 81/29**

(45) Publication of the grant of the patent:
**17.04.85 Bulletin 85/16**

(84) Designated Contracting States:
**DE FR GB IT NL SE**

(56) References cited:
**DD-A- 139 375**
**DE-A-2 003 729**
**GB-A-1 306 937**
**US-A-3 431 638**

(73) Proprietor: **The Pittman Corporation**
**Harleysville Pennsylvania 19438 (US)**

(72) Inventor: **Hendricks, Howard F.**
**924 Powderhorn Drive**
**Lansdale Pennsylvania 19446 (US)**

(74) Representative: **SERJEANTS**
**25 The Crescent**
**King Street**
**Leicester, LE1 6RX (GB)**

Courier Press, Leamington Spa, England.

## Description

This invention relates to coils and coil formers for use in ironless armature or brushless DC electric motors.

Brushless and ironless armature motors are well known in the art.

In brushless motors, where the windings are provided as part of the stator, it is common to provide winding locating slots in the iron of the motor shell and to locate the windings therein. Normally, the coils are wound on coil formers and then placed into and secured within the formed slots. The formers upon which the coils initially are wound provide the shaping of and for the coils but do not become an integral portion of the completed motor.

The pertinent patent art in the winding of such coils appears to be best illustrated by the United States Patents to Miyasaka, No. 4,123,679 and Kagami No. 4,019,075. Neither of these patents provides a coil former which remains as an integral portion of the wound coil.

In the coil provided in the Miyasaka reference, it is necessary physically to locate the desired coil former, to position the wire forming the coil on the former and thereafter sequentially to form the following windings therearound. The Miyasaka reference also provides a coil which will be electrically inconsistent at the apical regions of winding unless there is no concern for a loss of wound length of the coil and the apical portions thereof are then disregarded.

The coil winding resulting from the application of the principles of the Kagami reference is a hexagonal winding, to result in a hexagonal coil. The wound hexagonal portions are formed about a cylindrical coil former in a fashion to eliminate any coil overwrap exceeding two coil thicknesses.

The invention provides a coil former for the coil of an ironless armature or brushless D.C. electric motor, comprising a hollow cylindrical member formed of a thin non-magnetic material, characterized by having a circular array of inwardly directed, sawteeth-like winding locating serrations on each of its ends, each serration comprising a first surface for receiving successive turns of a winding of the coil, inclined at an acute angle to a plane perpendicular to the longitudinal axis of the coil former, and a second surface providing a shoulder at the longitudinally innermost end of the first surface for locating the first turn of the winding. The invention also provides a coil wound on such a former with each winding extending at a skew angle to the longitudinal axis, sequentially along the outer and inner surfaces of the coil former and located in the winding locating serrations in the ends of the former. The coil, in its finished form, is thus self-supporting and the coil former remains as an integral portion of the wound coil.

The inner diameter of the coil former is determined, in the case of a brushless D.C. motor, by adding the desired armature gap to the diameter of the magnets carried by the rotor of the motor and adding the diameter or thickness of the wire to be wound thereto. The finished, self-supporting coil is designed to be inserted into the stator and laminated or potted in place. The self supporting coil as described herein will simplify the normal process of winding the stator.

The finished, self-supporting coil is of a relatively thin radial dimension, depending upon the diameter or thickness of the wire wound upon the coil former.

The windings for the coil are skewed about the coil former and the first surface preferably has a length sufficient to position the desired number of turns of the individual windings in side-by-side relation thereon. The next succeeding winding will begin at the longitudinally innermost portion of the next serration, adjacent its shoulder, and in order to provide that adjacent coil windings are in close, side-by-side relation the second locating surface or shoulder of each serration is preferably formed at an acute angle to the first locating surface. This will ensure that the last turn of an individual winding can lie adjacent the innermost angle of the next serration and thus allow the first turn of the next winding received in such innermost portion to lie adjacent thereto.

In winding the individual coil winding about the former, a single turn of a winding will pass sequentially along the outer and inner surfaces of the coil former. If the skew angle of the winding is such as to provide a lead length of four times the length of the coil former, then a single turn of the coil winding will pass twice over the outer surface of the coil former and twice over the inner surface. Such a winding will provide in effect a pair of individual coil elements diametrically opposed to one another and connected in series. To achieve this the serrations at one end of the coil former should be displaced 90° from the serrations at the other end.

The coil provided, and the coil former allowing for the winding of such a complete coil, provides a relatively thin unit which has a high density of copper or conductor and which provides a substantially strong mechanical assembly. There is no overlapping of the individual turns of the complete coil. A motor using such a coil will have a high Unit Torque versus Unit Volume efficiency and the use of the coil will eliminate slot cogging which is of particular importance for servo applications.

Description of the Drawings

In the accompanying drawings the same numerals or indicia are used to identify the same or similar parts throughout the several views. In the drawings:

Figure 1 is a perspective view of a complete, multi-winding coil according to the invention;

Figure 2 is a perspective view of the coil former upon which the multi-winding coil of Figure 1 is wound, having traced thereon an individual turn of a coil winding;

Figure 3 is a perspective view of the coil former of Figure 2 without the coil turn being traced;

Figure 4 is an end view of the coil former of Figure 2;

Figure 5 is a side elevation of the coil former, showing the ends only;

Figure 6 is a developed view of one end of the coil former; and

Figure 7 is a view similar to that of Figure 6 but illustrating the placement of adjacent individual coil turns in side-by-side relation as in the wound coil of Figure 1.

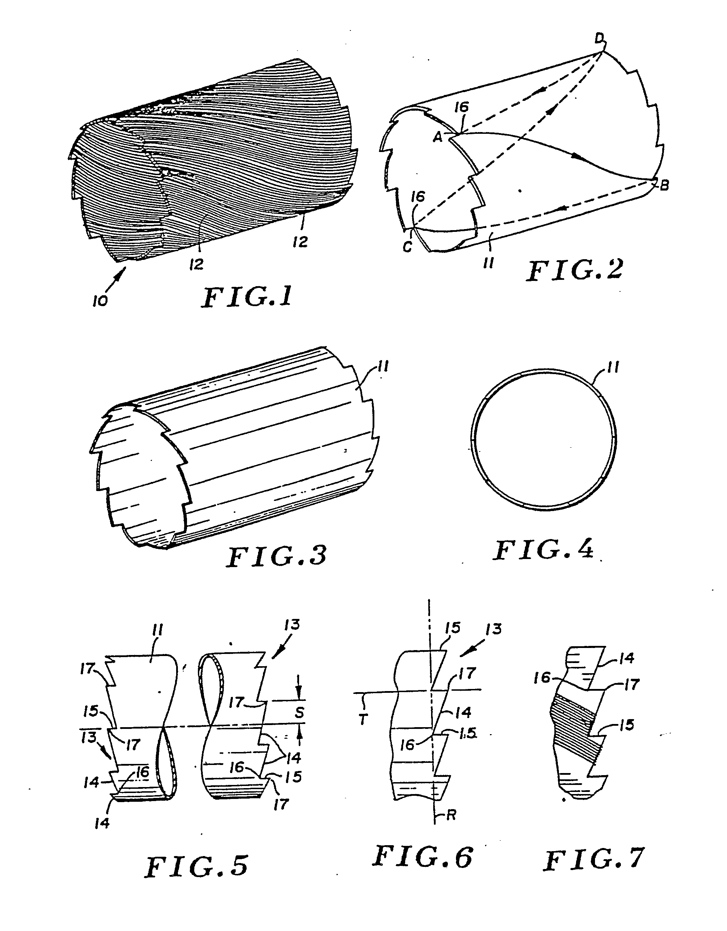

Figure 1 illustrates a complete multi-winding coil 10 on a coil former as suitable for use in an ironless armature or brushless motor. The unit 10 includes the coil former 11 of Figure 2 and the windings 12 that are wound thereon. A single turn of a coil winding 12 is illustrated in Figure 2 to illustrate the method in which the complete, multi-winding unit is wound and the advantages of the coil former 11 of the invention.

The coil former 11 consists of a longitudinally extending, tubular member, formed of a non-magnetic material and having sawteeth-like cutouts or serrations, generally designated in Figures 5 and 6 as 13, on each end thereof.

The serrations 13 provide pairs of surfaces for the positioning of the turns of the coil windings. A first of these surfaces is designated 14, and as illustrated in Figure 6, is arranged at an angle with respect to a radial plane R normal to the axis of the coil former 11. The second of these surfaces is a shoulder 15 and is arranged at an angle with respect to a longitudinally extending plane passing through the axis of the coil former 11, the plane being designated T. The junction of these two surfaces 14 and 15 then provides a serration with the longitudinally innermost portion designated 16 and the outermost portion designated 17.

The coil and coil former as illustrated herein provide for five (5) multiple windings each having two coil elements, and therefore effectively provide ten (10) individual coil elements which are connected in series. The angle of the surface 14 with respect to the plane R in this particular configuration is preferably fifteen degrees, but this angle may be selected from within the range of ten degrees to thirty degrees. Although the surface 15 in the embodiment illustrated is coincident with the plane T, it is preferred that the angle of surface 15 with respect to plane T, for this configuration, should be twenty-six degrees.

Certain criteria exist for surface 14, one being that the length thereof must accommodate the number of individual turns that are placed thereon in side-by-side relation. It is also highly desirable that adjacent coils are in side-by-side relation as particularly illustrated in Figure 7. As illustrated therein, the final turn of one coil is adjacent to the first turn of the next adjacent coil.

In the form shown, the multi-windings unit embodies five (5) windings. A single winding for one of such coils is illustrated in Figure 2. With a starting point of point A, the wire extends to point B over the outer surface of the form 11, point B being displaced 90° from point A. Thereafter the wire extends over the inner surface of the former 11 to point C, point C again being displaced 90° from point B. Thence the wire continues over the outer surface of the former 11 to point D and then over the inner surface to point A. Points A, B, C and D are spaced 90° from each other and thus points A and C and points B and D are spaced 180° from each other. With the five winding set illustrated, it should be apparent that there are ten (10) such serrations on each end of the former 11.

Modifications in the skewed effect for the coils may be obtained in accordance with the illustration of Figure 5. In the illustrated embodiment there is an odd number (5) of windings wound on the coil former, and each winding comprises two diametrically opposed coil elements. The serrations at opposite ends of the coil former 11 are therefore displaced from one another by 90° (to obtain the two diametrically opposed coil elements) with the result that each point 17 at one end of the coil form is displaced from its nearest point 17 at the opposite end by a displacement S equal to half the angular tooth width (18° in the illustrated embodiment which has 10 serrations each with an angular tooth width of 36°). If the coil form were made to accommodate an even number of windings and each winding were similarly to comprise two diametrically opposed coil elements, then the 90° displacement of the serrations at opposite ends of the coil form would bring the serrations into register with one another, so that the displacement S would be zero.

With the winding of the individual coil elements as illustrated, it is clear that the winding portions arranged on the inner and outer surfaces of the coil form are diametrically opposed to one another and thus each complete winding provides a pair of excitable coil elements connected in series. This is an improvement in brushless or ironless armature motors.

The wound coil as illustrated and discussed herein is a self supporting unit. This unit may be inserted, in wound form, into the inner diameter of a soft iron stator of a brushless D.C. electric motor or may be inserted into the inner diameter of the motor's laminations.

In the case of ironless armature motor applications, the self supporting coil structure will rotate freely about the inner and outer magnetic path-providing structure and will improve the torque and ripple characteristics of such a motor.

## Claims

1. A coil former for the coil of an ironless armature or brushless D.C. electric motor, comprising a hollow cylindrical member formed of a thin non-magnetic material, material, characterized by having inwardly directed, sawteeth-like winding locating serrations (13) on its ends, each serration comprising a first surface (14), inclined at an acute angle to a plane (R) perpendicular to the longitudinal axis of the coil former for receiving successive turns of a winding of the coil and a second surface (15) providing a shoulder at the longitudinally innermost end (16) of the first surface for locating the first turn of the winding.

2. A coil former according to claim 1, wherein the first surface (14) is inclined at an angle of from 10° to 30° to the plane (R) perpendicular to the longitudinal axis of the coil former.

3. A coil former according to claim 1, wherein the first surface (14) is inclined at an angle of 15° to the plane (R) perpendicular to the longitudinal axis of the coil former.

4. A coil former according to any preceding claim, wherein the second surface (15) is inclined at an acute angle to the first surface (14).

5. A coil former according to any preceding claim, wherein the second surface (15) is inclined at an angle to a radial plane (T) through the longitudinal axis of the coil former.

6. A coil former according to claim 5, wherein the second surface (15) is inclined at an angle of 26° to the plane (T) through the longitudinal axis of the coil former.

7. A coil former according to any preceding claim, wherein the serrations (13) at opposite ends of the coil former are displaced 90° from one another.

8. A coil for an ironless armature or brushless D.C. electric motor, wound on a coil former according to any preceding claim and characterized by having each winding extending at a skew angle to the longitudinal axis, sequentially along the outer and inner surfaces of the coil former and comprising a number of turns each extending over and contacting the first surfaces (14), with the first turn of each winding being located by the second surfaces (15).

9. A coil according to claim 8, wherein each winding of the coil extends from a first serration (A) at one end of the coil former, over an outer surface of the coil former to a second serration (B) at the other end of the coil former then over an inner surface of the coil former to a third serration (C) at the one end, then over the outer surface to a fourth serration (D) at the other end, and then over the inner surface back to the first serration (A), the successive first to fourth serrations (A to D) being displaced 90° from each other.

10. A coil according to claim 8 or claim 9, wherein an array of coil windings is wound on the coil former with adjacent coil windings being located in adjacent serrations.

11. A coil according to claim 10, wherein the last turn of each coil winding lies immediately adjacent the first coil turn of an adjacent coil winding, with no overlapping of the individual turns of the coil windings.

12. A coil according to claim 10 or claim 11, wherein five coil windings are wound on the coil former and connected together in series aiding relationship, and each coil winding comprises two diametrically opposed coil elements connected in series one to the other.

13. A coil according to claim 11 or claim 12 wherein multiple turns of individual coil windings are located in side-by-side relationship at each serration.

**Patentansprüche**

1. Spulenkörper für die Spule eines eisenlosen Ankers oder bürstenlosen Elektro-Gleichstrommotors, bestehend aus einem hohlen, aus dünnem nicht-magnetischen Material gebildeten zylinderförmigen Teil, gekennzeichnet durch an den Enden angeordnete, nach innen gerichtete, sägezahnartige, die Wicklungen aufnehmende Zacken (13), wobei jede Zacke eine erste, in einem spitzen Winkel zu einer zur Längsachse des Spulenkörpers vertikal verlaufenden Ebene (R) verlaufende, zur Aufnahme aufeinanderfolgender Windungen einer Spulenwicklung dienende Fläche (14) und eine zweite Fläche (15) aufweist, die am in Längsrichtung gesehen innersten Ende (16) der ersten Fläche als Schulter ausgebildet ist und die erste Windung der Wicklung fixiert.

2. Spulenkörper gemäß Anspruch 1, dadurch gekennzeichnet daß die erste Fläche (14) in einem Winkel von 10° bis 30° zu der mit der Längsachse des Spulenkörpers senkrecht verlaufenden Ebene (R) verläuft.

3. Spulenkörper gemäß Anspruch 1, dadurch gekennzeichnet daß die erste Fläche (14) in einem Winkel von 15° zu der mit der Längsachse des Spulenkörpers senkrecht verlaufenden Ebene (R) verläuft.

4. Spulenkörper gemäß einem der vorhergehenden Ansprüche, dadurch gekennzeichnet daß die zweite Fläche (15) in einem spitzen Winkel zur ersten Fläche (14) verläuft.

5. Spulenkörper gemäß einem der vorhergehenden Ansprüche, dadurch gekennzeichnet, daß die zweite Fläche (15) in einem Winkel zu einer durch die Längsachse des Spulenkörpers verlaufenden radialen Ebene (T) verläuft.

6. Spulenkörper gemäß Anspruch 5, dadurch gekennzeichnet daß die zweite Fläche (15) in einem Winkel von 26° zu der durch die Längsachse des Spulenkörpers verlaufenden Ebene (T) verläuft.

7. Spulenkörper gemäß einem der vorhergehenden Ansprüche, dadurch gekennzeichnet, daß die an entgegengesetzten Enden des Spulenkörpers angeordneten Zacken (13) um 90° voneinander versetzt sind.

8. Spule für einen eisenlosen Anker oder bürstenlosen Elektro-Gleichstrommotor, die gemäß einem der vorhergehenden Ansprüche auf einen Spulenkörper gewickelt ist, dadurch gekennzeichnet daß jede Wicklung schräg zur Längsachse nacheinander über die Innen- und Außenflächen des Spulenkörpers verläuft und jeweils aus einer Anzahl Windungen besteht, die über die ersten Flächen (14) verlaufen und diese berühren, wobei die erste Windung jeder Wicklung durch die zweiten Flächen (15) fixiert wird.

9. Spulenkörper gemäß Anspruch 8, dadurch gekennzeichnet daß jede Wicklung der Spule von einer ersten Zacke (A) an einem Ende des Spulenkörpers über eine Außenfläche des Spulenkörpers zu einer zweiten Zacke (B) am andern Ende Spulenkörpers, dann über eine Innenfläche des Spulenkörpers zu einer dritten Zacke (C) am ersten Ende, danach über die Außenfläche zu einer vierten Zacke (D) am andern Ende verläuft und von da aus über die Innenfläche zur ersten Zacke (A) zurückkehrt, wobei die aufeinanderfolgenden ersten vier Zacken (A bis D) um jeweils 90° von einander versetzt sind.

10. Spule gemäß Anspruch 8 oder Anspruch 9, dadurch gekennzeichnet daß eine Schar von Spulenwicklungen auf die Spule gewickelt werden, wobei nebeneinanderliegende Spulenwicklungen durch nebeneinanderliegende Zacken fixiert werden.

11. Spule gemäß Anspruch 10, dadurch gekennzeichnet, daß die letzte Windung jeder Spulenwicklung unmittelbar neben der ersten Spulenwindung einer angrenzenden Spulenwicklung liegt, ohne daß sich die einzelnen windungen der Spulenwicklungen überdecken.

12. Spule gemäß Anspruch 10 oder Anspruch 11, dadurch gekennzeichnet daß fünf Spulenwicklungen auf den Spulenkörper gewickelt und gleichsinnig hintereinander geschaltet werden, und daß jede Spulenwicklung zwei diametral entgegengesetzte Spulenelemente aufweist, die eins hinter das andere geschaltet werden.

13. Spule gemäß Anspruch 11 oder Anspruch 12, dadurch gekennzeichnet daß an jeder Zacke mehrere Windungen einzelnen Spulenwicklungen nebeneinanderliegend fixiert werden.

### Revendications

1. Un gabarit de bobinage pour la bobine d'un induit sans fer ou un moteur électrique de courant continu dans balai, comprenant un membre creux cylindrique formé d'un matériau mince non-magnetique, caractérisé par le fait d'avoir des dentelures (13) sciées de position à enroulement à ses extrémités, chaque dentelure comprenant une premiere surface (14), incliné à un angle aigu à une surface plane (R) perpendiculaire à l'axe longitudinal du gabarit de bobinage, pour recevoir des tours successifs d'enroulement de la bobine et une seconde surface (15) menageant une épaule à l'extrémité longitudinalement la plus avancée (16) de la première surface pour positionner le premier tour de bobinage.

2. Un gabarit de bobinage selon la revendication 1, dans lequel la première surface (14) est inclinée à un angle de 10° à 30° à la surface (R) perpendiculaire a l'axe longitudinal du gabarit de bobinage.

3. Un gabarit de bobinage, selon la revendication 1, dans lequel la premiere surface (14) est inclinée à un angle de 15° à la surface (R) perpendiculair à l'axe longitudinal du gabarit de bobinage.

4. Un gabarit de bobinage selon toutes les revendications précédentes, dans lequel la second surface (15) est inclinée à un angle aigu par rapport à la première surface (14).

5. Un gabarit de bobinage, selon toutes les revendications précédentes, dans lequel la seconde surface (15) est inclinée à un angle par rapport à une surface plane (T) à travers l'axe longitudinal du gabarit de bobinage.

6. Un gabarit de bobinage selon la revendication 5, dans lequel la seconde surface (15) est inclinée à un angle de 26° par rapport à la surface plane (T) à travers l'axe longitudinal due gabarit de bobinage.

7. Un gabarit de bobinage selon toutes les revendications précédentes, dans lequel les dentelures (13) aux extrémités opposées du gabarit de bobinage sont deplacées de 90° par rapport à l'autre.

8. Une bobine pour un induit sans fer ou un moteur électrique de courant continu sans balai, enroulée sur un conduit de bobinage selon toutes les revendications précédentes et caractérisée par le fait d'avoir chaque enroulement s'étendant à un angle oblique à l'axe longitudinal, en ordre le long des surfaces interieures et exterieures du gabarit de bobinage et comprenant un nombre de tours chacun s'étendant sur et en contact avec les premières surfaces (14) avec le premier tour de chaque enroulement étant localisé par les deuxièmes surfaces (15).

9. Une bobine selon la revendication 8, dans laquell chaque enroulement de la bobine s'étend de la première dentelure (A) à l'une des extrémités du gabarit de bobinage, au-dessus d'une surface exterieure du gabarit de bobinage à une seconde dentelure (B) à l'autre extrémité du gabarit de bobinage puis au-dessus d'une surface interieure du gabarit de bobinage à une troisième dentelure (C) à l'autre extrémité, puis au-dessus de la surface exterieure à une quatrième dentelure (D) a l'autre extrémité, et puis au-dessus de la surface interieure pour retourner à la première dentelure (A), les premières aux quatrièmes dentelures successives (A à D) étant placées à 90° l'une de l'autre.

10. Une bobine selon la revendication 8 ou 9, dans laquelle un rang d'enroulements de bobine est enroule sur le gabarit de bobinage avec des enroulements de bobine adjacents localisés dans les dentelures contigués.

11. Une bobine selon la revendication 10, dans laquelle le dernier tour de chaque enroulement de bobine se trouve immédiatement adjacent au premier tour de bobine d'un enroulement contigu de bobine, sans chevauchement des tours individuels des enroulement de bobine.

12. Une bobine selon la revendication 10 ou 11, dans laquelle 5 enroulements de bobine sont enroulés sur le gabarit de bobinage et reliés ensemble en series, et chaque enroulement de bobine comprend deux elements de bobine diametriquement opposés reliés en series l'un à l'autre.

13. Une bobine selon la revendication 11 ou 12, dans laquell des tours multiples d'enroulements de bobine individuels sont situés l'un à coté de l'autre à chaque dentelure.

FIG.1

FIG.2

FIG.3

FIG.4

FIG.5

FIG.6

FIG.7